# EUROPÄISCHE PATENTANMELDUNG

(11) **EP 3 091 135 A1**
(43) Veröffentlichungstag der Anmeldung: **09.11.2016**
(21) Anmeldenummer: 15166241.8
(22) Anmeldetag: 04.05.2015
(51) Int. Cl.: E04C 5/07

(54) **BEWEHRUNGSSTAB, VERFAHREN ZUR HERSTELLUNG UND VERWENDUNG**

(71) Anmelder: Evonik Degussa GmbH, 45128 Essen (DE)
(72) Erfinder: Fuchsmann, Dirk, 45721 Haltern am See (DE); Yaroslavskiy, Vladislav, 117321 Moscow (RU); Vogel, Michael, 45657 Recklinghausen (DE); Langkabel, Eike, 41844 Wegberg (DE); Ortelt, Martina, 48249 Dülmen (DE); Richter, Wladimir, 45665 Recklinghausen (DE)

(57) **Zusammenfassung**

Die Erfindung betrifft einen Bewehrungsstab, ein Verfahren zur Herstellung und Verwendung einer Zusammensetzung.

## Beschreibung

Die Erfindung betrifft einen Bewehrungsstab, ein Verfahren zur Herstellung und Verwendung einer Zusammensetzung.

Bewehrungsstäbe, in der englischen Literatur "Rebars" genannt, werden insbesondere im Betonbau verwendet. Die üblichen Bewehrungsstäbe bestehen aus Stahl.

### Stand der Technik

Seit einiger Zeit werden aber auch Bewehrungsstäbe aus Kunststoffen, insbesondere aus faserverstärkten Kunststoffen eingesetzt.

DE 101 21 021 A1 und DE 10 2007 027 015 A1 [Schöck] beschreiben Bewehrungsstäbe aus faserverstärktem Kunststoff (GFK-Bewehrungsstäbe) mit eingefrästen Rippen unterschiedlicher Geometrien an der Oberfläche der Stäbe zur Verankerung im Beton. DE 101 21 021 nennt ungesättigte Polyester- und Vinylesterharze als Beispiele für die Kunststoffmatrix, weitere Angaben hierzu werden nicht gemacht. EP 0 427 111 B1 [Sportex] beschreibt ein Verfahren zur Herstellung von faserverstärkten Kunststoff-Bewehrungsstäben mit besandeter Oberfläche. Bei dem erfindungsgemäßen Verfahren wird bevorzugt ein Epoxidharz eingesetzt. Es werden jedoch keine Angaben zu dem Härtersystem für das Epoxidharz gemacht. WO 2010/139045 A1 [Brandstrom] nennt ein Verfahren zur Bereitstellung von endlos-Bewehrungen aus faserverstärkten Kunststoffen. Die GFK-Bewehrung zeigt einen deutlich geringeren E-Modul als Bewehrungsstahl und lässt sich deshalb zur Bereitstellung auf der Baustelle auf eine geeignete Vorrichtung aufspulen. Hier werden duromere Harzsysteme eingesetzt, bevorzugt Vinylesterharze. Weitere Angaben zur Natur des Harzsystems werden nicht gemacht. WO98/15403 [Marshall] hat eine Vorrichtung zur Herstellung von FK-Bewehrungsstäben zum Gegenstand. Das beschriebene Verfahren sieht die Verwendung einer formbaren Aluminiumfolie als temporäres Hilfsmittel zur Herstellung von profilierten und ggf. gebogenen GFK-Bewehrungsstäben vor. Die Kunststoff-matrix besteht aus duromeren Harzsystemen, bevorzugt ungesättigte Polyester-, Vinylester- oder Phenolharze. Diese Harzsysteme können in Kombination mit anderen Duromeren, darunter Epoxidharze, und auch thermoplastischen Harzen eingesetzt werden. Auch hier werden keinerlei Angaben zu einem ggf. bevorzugten Härtersystem für das Epoxidharz gemacht. Die Lebensdauer von Betonbauwerken ist stark abhängig von der Art der Bewehrung sowie von der Qualität des Verbunds zwischen Beton und Bewehrung. Ein herkömmliches Stahlbetonbauwerk (Schwarzstahl) hat eine Lebensdauer von nicht wesentlich mehr als 30 Jahren infolge Zerstörung der Bewehrung und des Verbunds (Oxidation, Rostbildung) durch aggressive Umwelteinflüsse (z. B. Meerwasserexposition an Küsten sowie Tausalzexposition im Bereich Verkehrswegeinfrastruktur (z. B. Brücken, Straßen, Beton-"Leitplanken", Lärmschutzwände, Parkdecks)). Hier kommen häufig höherwertige Bewehrungen zum Einsatz wie z. B. Duplex-Stahl oder Edelstahl, bei welchem man von einer Lebensdauer von bis zu 70 Jahren ausgeht. Nachteilig ist hier jedoch der deutlich höhere Preis was eine solche Lösung häufig unattraktiv macht. Bewehrungsstäbe auf Basis faserverstärkter Kunststoffe sind bekannt; zumeist werden hier ungesättigte Polyesterharze und Vinylesterharze als Harzmatrix eingesetzt. UP-Harze sind jedoch gegen alkalische Medien nicht beständig und Vinylesterharze erreichen das mechanische Eigenschaftsniveau von Epoxidharzen nicht. Mit Anhydrid gehärtete Epoxidharzformulierungen werden bereits für die Herstellung von Composite-Bewehrungsstäben eingesetzt, allerdings wird auch mit einer solchen Formulierung die geforderte Alkalibeständigkeit nicht erreicht.

### Aufgabe

Aufgabe war es, neue Bewehrungsstäbe zu finden, die sich durch eine besondere Chemikalienbeständigkeit, insbesondere gegen das alkalische Milieu des Betons sowie gegen Umwelteinflüsse wie Salzwasser, auszeichnen.

Es bestand also das Bedürfnis nach einem Bewehrungsstab, der außergewöhnlich korrosionsbeständig und damit äußerst langlebig ist. Gleichzeitig müssen alle Anforderungen an das mechanische Eigenschaftsbild erfüllt werden.

Die Aufgabe wurde durch die Bewehrungsstäbe gemäß der Erfindung gelöst.

Gegenstand der Erfindung sind Bewehrungsstäbe, im Wesentlichen aufgebaut aus
A) mindestens einem Faser förmigen Träger
   und
B) und einer gehärteten Zusammensetzung aus
B1) mindestens einer Epoxyverbindung
   und
B2) mindestens einem Diamin und/oder Polyamin
   in einem stöchiometrischen Verhältnis der Epoxyverbindung B1) zu der Diamin und/oder Polyamin Komponente B2) von 0,8:1 bis 2:1,
   als Matrixmaterial,
   sowie
C) optional weiteren Hilfs- und Zusatzstoffen.

Das stöchiometrische Verhältnis der Epoxyverbindung B1) zu dem Diamin und/oder Polyamin B2) beträgt 0,8:1 bis 2:1, bevorzugt 0,95:1, besonders bevorzugt 1:1. Das stöchiometrische Verhältnis wird wie folgt berechnet: eine stöchiometrische Umsetzung bedeutet, dass eine Oxirangruppe des Epoxidharzes mit einem aktiven Wasserstoff des Amins reagiert. Ein stöchiometrisches Verhältnis von Epoxykomponente B1) zu Aminkomponente B2) von z.B. 0,8:1 bedeutet (Epoxyäquivalent [g/val] x 0,8) zu (H-Aktiväquivalent Amin [g/val] x 1).
Die Bewehrungsstäbe sind nach dem Applizieren und Härten der Zusammensetzung B), bevorzugt durch thermische Behandlung, nicht klebrig und daher sehr gut zu handhaben und weiter zu verarbeiten. Die erfindungsgemäß eingesetzten Zusammensetzungen B) weisen eine sehr gute Haftung und Verteilung auf dem Faser förmigen Träger auf.

Die erfindungsgemäß verwendeten Zusammensetzungen B) sind flüssig und damit ohne Zugabe von Lösungsmitteln für die Imprägnierung von Fasermaterial geeignet, umweltfreundlich, kostengünstig, weisen gute mechanische Eigenschaften auf, lassen sich einfach verarbeiten und zeichnen sich nach Härtung durch eine gute Witterungsbeständigkeit aus.

Erfindungsgemäß weisen die Bewehrungsstäbe eine besondere Chemikalienbeständigkeit, insbesondere gegen das alkalische Milieu des Betons und Salzwasser auf.

### Faserförmiger Träger A)

Der faserförmige Träger in der vorliegenden Erfindung besteht aus faserförmigem Material, auch häufig Verstärkungsfasern genannt. Im Allgemeinen ist jegliches Material, aus dem die Fasern bestehen, geeignet, bevorzugt wird jedoch faserförmiges Material aus Glas, Kohlenstoff, Kunststoffen, wie z. B. Polyamid (Aramid) oder Polyester, Naturfasern oder mineralischen Fasermaterialien wie Basaltfasern oder keramische Fasern (Oxidische Fasern auf Basis von Aluminiumoxiden und/oder Siliciumoxiden) verwendet. Auch Mischungen von Fasertypen, wie z. B. Kombinationen aus Aramid- und Glasfasern, oder Kohlenstoff und Glasfasern, können verwendet werden.

Glasfasern sind hauptsächlich wegen ihres relativ geringen Preises die am häufigsten verwendeten Fasertypen. Prinzipiell sind hier alle Arten von glasbasierenden Verstärkungsfasern geeignet (E-Glas-, S-Glas-, R-Glas-, M-Glas-, C-Glas-, ECR-Glas-, D-Glas-, AR-Glas-, oder Hohlglasfasern). Kohlenstofffasern kommen im Allgemeinen in Hochleistungsverbundstoffen zum Einsatz, wo auch die im Verhältnis zur Glasfaser niedrigere Dichte bei gleichzeitig hoher Festigkeit ein wichtiger Faktor ist. Kohlenstofffasern (auch Carbonfasern) sind industriell hergestellte Fasern aus kohlenstoffhaltigen Ausgangsmaterialien, die durch Pyrolyse in graphitartig angeordneten Kohlenstoff umgewandelt werden. Man unterscheidet isotrope und anisotrope Typen: isotrope Fasern besitzen nur geringe Festigkeiten und geringere technische Bedeutung, anisotrope Fasern zeigen hohe Festigkeiten und Steifigkeiten bei gleichzeitig geringer Bruchdehnung. Als Naturfasern werden hier alle Textilfasern und Faserwerkstoffe bezeichnet, die aus pflanzlichem und tierischem Material gewonnen werden (z. B. Holz-, Zellulose-, Baumwoll-, Hanf-, Jute-, Leinen-, Sisal-, Bambusfasern). Aramid-Fasern weisen, ähnlich wie auch Kohlenstofffasern, einen negativen Wärmeausdehnungskoeffizienten auf, werden also bei Erwärmung kürzer. Ihre spezifische Festigkeit und ihr Elastizitätsmodul sind deutlich niedriger als jene von Kohlenstofffasern. In Verbindung mit dem positiven Ausdehnungskoeffizienten des Matrixharzes lassen sich hoch maßhaltige Bauteile fertigen. Gegenüber Kohlenstofffaser verstärkten Kunststoffen ist die Druckfestigkeit von Aramidfaser- Verbundwerkstoffen deutlich geringer. Bekannte Markennamen für Aramidfasern sind Nomex® und Kevlar® von DuPont, oder Teijinconex®, Twaron® und Technora® von Teijin. Besonders geeignet und bevorzugt sind Träger aus Glasfasern, Kohlenstofffasern, Aramidfasern oder keramischen Fasern. Alle genannten Materialien sind im Rahmen der Erfindung als faserförmiger Träger geeignet. Einen Überblick über Verstärkungsfasern enthält "Composites Technologien", Paolo Ermanni (Version 4), Script zur Vorlesung ETH Zürich, August 2007, Kapitel 7.

Das bevorzugt erfindungsgemäß verwendete Trägermaterial ist dadurch gekennzeichnet, dass die faserförmigen Träger aus Glas, Kohlenstoff, Kunststoffen (bevorzugt aus Polyamid (Aramid) oder Polyester), mineralischen Fasermaterialien wie Basaltfasern oder keramische Fasern, einzeln oder aus Mischungen verschiedener Fasertypen bestehen.

Bevorzugt sind Glasfaserstäbe jeglicher Geometrie, insbesondere runde sowohl als massive als auch als hohle Stäbe.

Besonders bevorzugt sind massive Stäbe, welche an der Oberfläche zur festen Verankerung im Beton profiliert sind, z. B. durch Umwindefäden oder das Einfräsen einer ring- oder spiralförmigen Nut.

Die Stäbe können weiterhin an der Oberfläche mit einem Topcoat versehen werden.

### Matrixmaterial B)

### Epoxyverbindungen B1)

Geeignete Epoxyverbindungen B1) werden z. B. in EP 675 185 beschrieben.

Es kommt eine Vielzahl der hierfür bekannten Verbindungen in Betracht, die mehr als eine Epoxidgruppe, vorzugsweise zwei Epoxidgruppen, pro Molekül enthalten. Diese Epoxyverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten, Äthergruppierungen und ähnliche. Vorzugsweise handelt es sich dabei um Glycidyläther, die sich von mehrwertigen Phenolen, insbesondere Bisphenolen sowie Novolaken ableiten und deren Molmassen bezogen auf die Anzahl der Epoxygruppen ME ("Epoxidäquivalentgewichte", "EV-Wert") zwischen 100 und 1500, insbesondere jedoch zwischen 150 und 250 g/val, liegen.

Als mehrwertige Phenole sind beispielsweise zu nennen: Resorcin, Hydrochinon, 2,2-Bis-(4-hydroxyphenyl)-propan (Bisphenol A), Isomerengemische des Dihydroxydiphenylmethans (Bisphenol F), 4,4'-Dihydroxydiphenylcyclohexan, 4,4'-Dihydroxy-3,3'-dimethyldiphenylpropan,4,4'-Dihydroxydiphenyl,4,4'-Dihydroxybenzophenon, Bis-(4-hydroxyphenyl)-1,1-äthan, Bis-(4-hydroxyphenyl)-1,1-isobutan, 2,2-Bis-(4-hydroxy-tert.butylphenyl)-propan, Bis-(2-hydroxynaphthyl)-methan, 1,5-Dihydroxynaphthalin, Tris-(4-hydroxyphenyl)-methan, Bis-(4-hydroxyphenyl)-äther, Bis-(4-hydroxyphenyl)-sulfon u. a. sowie die Chlorierungs- und Bromierungsprodukte der vorstehend genannten Verbindungen wie beispielsweise Tetrabrom-Bisphenol A. Ganz besonders bevorzugt, werden flüssige Diglycidyläther auf Basis von Bisphenol A und Bisphenol F mit einem Epoxidäquivalentgewicht von 150 bis 200 g/val eingesetzt.

Es können auch Polyglycidyläther von Polyalkoholen verwendet werden, wie z. B. Äthandiol-1,2-diglycidyläther, Propandiol-1,2-diglycidyläther, Propandiol-1,3-diglycidyläther, Butandioldiglycidyläther, Pentandioldiglycidyläther (auch Neopentylglykoldiglycidyläther), Hexandioldiglycidyläther, Diäthylenglykoldiglycidyläther, Dipropylenglykoldiglycidyläther, höhere Polyoxyalkylenglykoldiglycidyläther, wie z. B. höhere Polyoxyäthylenglykoldiglycidyläther und Polyoxypropylenglykoldiglycidyläther, Mischpolyoxyäthylen-propylenglykoldiglycidyläther, Polyoxytetramethylenglykoldiglycidyläther, Polyglycidyläther des Glycerins, des 1,2,6-Hexantriols, Trimethylolpropans, Trimethyloläthans, Pentaerythrits, Sorbitols, Polyglycidyläther von oxalkylierten Polyolen (wie z. B. des Glycerins, Trimethylolpropans, Pentaerythrits u. a.), Diglydicyläther des Cyclohexandimethanols, Bis-(4-hydroxycyclohexyl)methans und 2,2-Bis-(4-hydroxycyclohexyl)propans, Polyglycidyläther des Rizinusöls, Triglycidyltris-(2-hydroxy-äthyl)-isocyanurat.

Weiterhin kommen als Komponente B1) in Frage: Poly-(N-glycidyl) Verbindungen, die erhältlich sind durch Dehydrohalogenierung der Reaktionsprodukte von Epichlorhydrin und Aminen wie Anilin, n-Butylamin, Bis-(4-aminophenyl)methan, m-Xylylendiamin oder Bis-(4-methylaminophenyl)methan. Zu den Poly-(N-glycidyl)-Verbindungen zählen aber auch Triglycidylisocyanurat, Triglycidylurazol sowie deren Oligomere, N,N'-Diglycidylderivate von Cycloalkylenharnstoffen und Diglycidylderivate von Hydantoinen u. a.

Weiterhin können auch Polyglycidylester von Polycarbonsäuren eingesetzt werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Tetrahydrophthalsäure, Hexahydrophthalsäure, 2,6-Naphthalindicarbonsäure und höhere Dicarbonsäurediglycidylester, wie z. B. dimerisierte bzw. trimerisierte Linolensäure, erhält. Beispiele sind Adipinsäurediglycidylester, Phthalsäurediglycidylester und Hexahydrophthalsäurediglycidylester.

Weiterhin seien genannt Glycidylester ungesättigter Carbonsäuren und epoxidierte Ester von ungesättigten Alkoholen bzw. ungesättigten Carbonsäuren. Zusätzlich zu den Polyglycidyläthern können geringe Mengen von Monoepoxiden wie z. B. Methylglycidyläther, Butylglycidyläther, Allylglycidyläther, Äthylhexylglycidyläther, langkettige aliphatische Glycidyläther, wie z. B. Cetylglycidyläther und Stearylglycidyläther, Monoglycidyläther eines höheren isomeren Alkoholgemisches, Glycidyläther einer Mischung von C12 bis C13 Alkoholen, Phenylglycidyläther, Kresylglycidyläther, p-t-Butylphenylglycidyläthers, p-Octylphenylglycidyläther, p-Phenylphenylglycidyläther, Glycidyläther eines oxalkylierten Laurylalkohols sowie Monoepoxide wie beispielsweise epoxidierte einfach ungesättigte Kohlenwasserstoffe (Butylen-, Cyclohexen-, Styroloxid) in Massenanteilen bis zu 30 %, vorzugsweise 10 bis 20 %, bezogen auf die Masse der Polyglycidyläther mitverwendet werden

Eine ausführliche Aufzählung der geeigneten Epoxyverbindungen findet sich in dem Handbuch "Epoxidverbindungen und Epoxidharze" von A. M. Paquin, Springer Verlag, Berlin 1958, Kapitel IV, und in Lee Neville "Handbook of Epoxy Resins", 1967, Chapter 2.

Als Epoxyverbindungen B1) kommen dabei bevorzugt Glycidylether und Glycidylester, aliphatische Epoxide, Diglycidylether auf Basis Bisphenol A und / oder Bisphenol F und Glycidylmethacrylate in Frage. Beispiele für solche Epoxide sind auch Triglycidylisocyanurat (TGIC, Handelsname ARALDIT 810, Huntsman), Gemische aus Terephthalsäurediglycidylester und Trimelitsäuretriglycidylester (Handelsname ARALDIT PT 910 und 912, Huntsman), Glycidylester der Versaticsäure (Handelsname CARDURA E10, Shell), 3,4-Epoxycyclohexylmethyl-3',4'-epoxycyclohexancarboxylat (ECC), Ethylhexylglycidylether, Butylglycidylether, Pentaerythrittetraglycidylether, (Handelsname POLYPOX R 16, UPPC AG) sowie andere Polypoxtypen mit freien Epoxygruppen.

Es können auch Mischungen der genannten Epoxyverbindungen eingesetzt werden.

Als Epoxykomponente B1) werden besonders bevorzugt Polyepoxide auf Basis von Bisphenol A-diglycidylether, Bisphenol F-diglycidylether oder cycloaliphatische Typen eingesetzt. Vorzugsweise werden in der erfindungsgemäßen härtbaren Zusammensetzung B) Epoxidharze eingesetzt, ausgewählt aus der Gruppe umfassend Epoxidharze auf Basis von Bisphenol A-diglycidylether, Epoxidharze auf Basis von Bisphenol F-diglycidylether und cycloaliphatische Typen wie z. B. 3,4-Epoxycyclohexyl-epoxyethan oder 3,4-Epoxycyclohexylmethyl-3,4-epoxy-cyclohexancarboxylat wobei Bisphenol A basierte Epoxidharze und Bisphenol F basierte Epoxidharze besonders bevorzugt sind.

Erfindungsgemäß können auch Mischungen von Epoxyverbindungen als Komponente B1) eingesetzt werden.

### Amine B2)

Di- oder Polyamine B2) sind in der Literatur bekannt. Diese können monomere, oligomere und/oder polymere Verbindungen sein.

Monomere und oligomere Verbindungen sind bevorzugt ausgewählt aus der Gruppe Diamine, Triamine, Tetramine.

Bevorzugt werden für die Komponente B2) primäre und/oder sekundäre Di- oder Polyamine eingesetzt, besonders bevorzugt primäre Di- oder Polyamine. Die Aminogruppe der Di- oder Polyamine B2) kann an einem primären, sekundären oder tertiären Kohlenstoffatom angebunden sein, bevorzugt an einem primären oder sekundären Kohlenstoffatom.

Als Komponente B2) werden bevorzugt die folgenden Amine allein oder in Mischungen eingesetzt:
- aliphatische Amine, wie die Polyalkylenpolyamine, bevorzugt ausgewählt aus 1,2-Ethylendiamin, 1,2-Propylendiamin, 1,3-Propylendiamin, 1,2-Butylendiamin, 1,3-Butylendiamin, 1,4-Butylendiamin, 2-(Ethylamino)ethylamin, 3-(Methylamino)propylamin Diethylentriamin,Triethylentetramin, Pentaethylenhexamin, Trimethylhexamethylendiamin, 2,2,4- Trimethylhexamethylendiamin, 2,4,4-Trimethylhexamethylendiamin, 2-Methylpentandiamin, Hexamethylendiamin, N-(2-Aminoethyl)-1,2-ethandiamin, N-(3-Aminopropyl)-1,3-propandiamin, N,N"-1,2-Ethandiylbis-(1,3-propandiamin), Dipropylentriamin Adipinsäuredihydrazid, Hydrazin;
- Oxyalkylenpolyamine, ausgewählt aus Polyoxypropylendiamin und Polyoxypropylentriamin (z. B., Jeffamine® D-230, Jeffamine® D-400, Jeffamine® T-403, Jeffamine® T-5000), 1,13-Diamino-4,7,10-trioxatridecan, 4,7-Dioxadecan-1,10-diamin;
- cycloaliphatische Amine, ausgewählt aus Isophorondiamin (3,5,5-Trimethyl-3-aminomethyl-cyclohexylamin), 4,4'-Diaminodicyclohexylmethan, 2,4'-Diaminodicyclohexylmethan und 2,2'-Diaminodicyclohexylmethan allein oder in Mischungen der Isomeren, 3,3'-Dimethyl-4,4'-diamino-dicyclohexylmethan, N-Cyclohexyl-1,3-propandiamin, 1,2-Diaminocyclohexan, 3-(Cyclohexylamino)propylamin, Piperazin, N-Aminoethylpiperazin, TCD-Diamin (3(4), 8(9)-Bis(aminomethyl)-tricyclo[5.2.1.0^{2.6}]decan),
- araliphatische Amine, wie Xylylendiamine;
- aromatische Amine, ausgewählt aus Phenylendiamine, 1,3-Phenylendiamin,. 1,4-Phenylendiamin,4,4'-Diaminodiphenylmethan, 2,4'-Diaminodiphenylmethan 2,2'-Diaminodiphenylmethan allein oder in Mischungen der Isomeren;
- Addukthärter, welches die Umsetzungsprodukte von Epoxidverbindungen, insbesondere Glycidylether des Bisphenol A und F, mit überschüssigem Amin sind;
- Polyamidoaminhärter, die durch Kondensation von Mono- und Polycarbonsäuren mit Polyaminen erhalten werden, insbesondere durch Kondensation von Dimerfettsäuren mit Polyalkylenpolyaminen;
- Mannichbasenhärter, die durch Umsetzung von ein- oder mehrwertigen Phenolen mit Aldehyden, insbesondere Formaldehyd, und Polyaminen erhalten werden;
- Mannichbasen z. B. auf Basis von Phenol und/oder Resorcin, Formaldehyd und m-Xylylendiamin sowie N-Aminoethylpiperazin und Abmischungen von N-Aminoethylpiperazin mit Nonylphenol und/oder Benzylalkohol, Phenalkamine, die in einer Mannichreaktion aus Cardanolen, Aldehyden und Aminen gewonnen werden.

Es können auch Mischungen der vorab genannten Di- oder Polyamine als Komponente B2) eingesetzt werden.

Bevorzugt werden Diamine als Komponente B2) ausgewählt aus Isophorondiamin (3,5,5-Trimethyl-3-aminomethyl-cyclohexylamin, IPD), 4,4'-Diaminodicyclohexylmethan, 2,4'-Diaminodicyclohexylmethan 2,2'-Diaminodicyclohexylmethan (auch als PACM bezeichnet) allein oder in Mischungen der Isomeren, eine Mischung der Isomeren aus 2,2,4-Trimethylhexamethylendiamin und 2,4,4-Trimethylhexamethylendiamin (TMD), Addukthärter auf Basis der Umsetzungsprodukte von Epoxidverbindungen und den vorgenannten Aminen oder Kombination von vorgenannten Aminen, eingesetzt. Es können auch Mischungen dieser Verbindungen eingesetzt.

Ganz besonders bevorzugt wird Isophorondiamin (3,5,5-Trimethyl-3-aminomethyl-cyclohexylamin, IPD), und/oder eine Kombination aus Isophorondiamin und eine Mischung der Isomeren aus 2,2,4-Trimethylhexamethylendiamin und 2,4,4-Trimethylhexamethylendiamin (TMD) und/oder Addukthärter auf Basis der Umsetzungsprodukte von Epoxidverbindungen und den vorgenannten Aminen oder Kombination von vorgenannten Aminen eingesetzt.

Zusätzlich zu den Di- und Polyaminen B2) können die Di- und Polyamine zusammen mit latenten Härtern als Komponente B2) eingesetzt werden. Als zusätzlicher latenter Härter kann im Prinzip jede für diesen Zweck bekannte Verbindung eingesetzt werden, d.h. jede Verbindung, welchen dem Epoxidharz gegenüber unterhalb der definierten Grenztemperatur von 80 DEG C inert ist, die aber schnell unter Vernetzung des Harzes reagiert, sobald diese Grenztemperatur überschritten ist. Die Grenztemperatur der verwendeten latenten Härter ist vorzugsweise mindesten 85 DEG C, insbesondere mindestens 100 DEG C. Solche Verbindungen sind wohlbekannt und auch im Handel erhältlich.

Beispiele geeigneter latenter Härter sind Dicyandiamid, Cyanoguanidine, wie z. B. die in den US 4,859,761 oder EP-A- 306,451 beschriebenen Verbindungen, aromatische Amine, wie z.B. 4,4 min - oder 3,3 min -Diaminodiphenylsulfon, oder Guanidine, wie z. B. 1-o-Tolylbiguanid, oder modifizierte Polyamine, wie z. B. Ancamine TM 2014 S (Anchor Chemical UK Limited, Manchester).

Geeignete latente Härter sind auch N-Acylimidazole, wie z.B. 1-(2,4,6 -Trimethylbenzoyl)-2-phenylimidazol oder 1-Benzoyl-2-isopropylimidazol. Solche Verbindungen sind beispielsweise in den US 4,436,892, US 4,587,311 oder der JP-PS 743,212 beschrieben.

Weitere geeignete Härter sind Metallsalzkomplexe von Imidazolen, wie z. B. in der US 3,678,007 oder US 3,677,978 beschrieben, Carbonsäurehydrazide, wie z. B. Adipinsäuredihydrazid, Isophthalsäuredihydrazid oder Anthranilsäurehydrazid, Triazinderivate, wie z. B. 2-Phenyl-4,6-diamino-s-triazin (Benzoguanamin) oder 2-Lauryl-4,6-diamino-s-triazin (Lauroguanamin) sowie Melamin und dessen Derivate. Die letztgenannten Verbindungen sind z. B. in der US 3,030,247 beschrieben.

Als latente Härter geeignet sind auch Cyanacetylverbindungen, wie z. B. in der US 4,283,520 beschrieben, beispielsweise Neopentylglykolbiscyanessigester, Cyanessigsäure-N-isobutylamid, 1,6-Hexamethylen-bis-cyanacetat oder 1,4-Cyclohexandimethanol-bis-cyanacetat.

Geeignete latente Härter sind auch N-Cyanacylamid-Verbindungen wie z. B. N,N min - Dicyanadipinsäurediamid. Solche Verbindungen sind z. B. in den US 4,529,821, US 4,550,203 and US 4,618,712 beschrieben.

Weitere geeignete latente Härter sind die in der US 4,694,096 beschriebenen Acylthiopropylphenole und die in der US 3,386,955 offenbarten Harnstoffderivate wie beispielsweise Toluol-2,4-bis(N,N-dimethylcarbamid).

Bevorzugte latente Härter sind 4,4 -Diaminodiphenylsulfon und insbesondere Dicyandiamid. Die o. g. latenten Härter können in Mengen bis zu 30 Gew%, bezogen auf die Gesamt-Aminzusammensetzung (Komponente B2) zugegen sein.

### Hilfs- und Zusatzstoffe C)

Zusätzlich zu den Komponenten A) und B) (Trägermaterial und Harzzusammensetzung) können die Bewehrungsstäbe noch weitere Zusatzstoffe aufweisen; diese werden üblicherweise der Harzzusammensetzung B) zugegeben. So können beispielsweise Lichtschutzmittel wie z. B. sterisch gehinderte Amine, oder andere Hilfsmittel, wie sie z. B. in EP 669 353 beschrieben wurden, in einer Gesamtmenge von 0,05 bis 5 Gew.-% zugesetzt werden. Füllstoffe und Pigmente wie z. B. Titandioxid oder organische Farbstoffe können in einer Menge bis zu 30 Gew.-%der Gesamtzusammensetzung zugesetzt werden. Für die Herstellung der erfindungsgemäßen reaktiven Zusammensetzungen können darüber hinaus Zusatzstoffe wie Verlaufsmittel, z. B. Polysilicone oder Haftvermittler, z. B. auf Acrylatbasis, zugesetzt werden. Zusätzlich können noch weitere Komponenten optional enthalten sein. Als Hilfs und Zusatzstoffe können zusätzlich Regler, Weichmacher, Stabilisatoren und/oder Inhibitoren eingesetzt werden. Darüber hinaus können Farbstoffe, Füllstoffe, Netz-, Dispergier- und Verlaufshilfsmittel, Haftvermittler, UV-Stabilisatoren, Entschäumer und Rheologieadditive zugesetzt werden.

Weiterhin können Katalysatoren für die Epoxy-Amin-Reaktion zugegeben werden. Geeignete Beschleuniger sind beschrieben in: H. Lee and K. Neville, Handbook of Epoxy Resins, McGraw-Hill, New York, 1967. Normalerweise werden Beschleuniger in Mengen von nicht mehr als 10 %, bevorzugt in Mengen von 5 % oder weniger, bezogen auf das Gesamtgewicht der Formulierung, eingesetzt.

Beispiele für geeignete Beschleuniger sind organische Säuren wie Salicylsäure, Dihydroxybenzoesäure, Trihydroxybenzoesäure, Methylsalicylsäure, 2-Hydroxy-3-isopropyl-benzoesäure oder Hydroxynaphthoesäuren, Milchsäure und Glycolsäure, tertiäre Amine wie Benzyldimethylamin (BDMA), 1,4-Diazabicyclo[2,2,2]octan (DABCO), Triethylamin, N,N'-Dimethylpiperazin oder Aminoethylpiperazin (AEP), Hydroxylamine wie Dimethylaminomethylphenol, Bis(dimethylaminomethyl)phenol, 2,4,6-Tris(dimethylaminomethyl)phenol (Ancamine K54), Urone wie 3-(4-Chlorphenyl)-1,1-dimethylharnstoff (Monuron), 3-(3,4-Dichlorphenyl)-1,1-dimethyl-harnstoff (Diuron), 3-Phenyl-1,1-dimethylharnstoff (Fenuron), 3-(3-Chlor-4-methylphenyl)-1,1-dimethyl-harnstoff (Chlortoluron), Tetraalkylguanidine wie N,N,N',N'-Tetramethylguanidin (TMG), Imidazol und -derivate wie 1 H-Imidazol, 1-Methylimidazol, 2-Methylimidazol, 1-Benzyl-2-methylimidazol, 2-Ethyl-4-methylimidazol, 2-Phenylimidazol, 2-Phenyl-4-methylimidazol, 1-Vinylimidazol, 1-(2-Hydroxyethyl)imidazol, 1,2-Dimethylimidazol, 1-Cyanoethylimidazol und deren geeignete Salze, Phenol und -derivate wie t-Butylphenol, Nonylphenol, Bisphenol-A oder Bisphenol-F sowie organische oder anorganische Salze und Komplexverbindungen wie Methyltriphenylphosphoniumbromid, Calciumnitrat (Accelerator 3130), oder Mg-, Ca-, Zn- und Sn-Carboxylate, -sulfonate, -phosphonate, -sulfate, - tetrafluoroborate, oder -nitrate.

Gegenstand der Erfindung ist auch ein Verfahren zur Herstellung von Bewehrungsstäben, im Wesentlichen aufgebaut aus
A) mindestens einem Faser förmigen Träger
   und
B) und einer gehärteten Zusammensetzung aus
B1) mindestens einer Epoxyverbindung
   und
B2) mindestens einem Diamin und/oder Polyamin
   in einem stöchiometrischen Verhältnis der Epoxyverbindung B1) zu der Diamin und/oder Polyamin Komponente B2) von 0,8:1 bis 2:1,
   als Matrixmaterial,
   sowie
C) optional weiteren Hilfs- und Zusatzstoffen,
durch Aufbringen einer Mischung von B1) und B2) und optional C) auf den Faser förmigen Träger,
und anschließende Härtung der Zusammensetzung.

### Aufbringen, Härtung, Temperaturen, Verfahren, Varianten,

Die erfindungsgemäßen Bewehrungsstäbe aus faserverstärkten Kunststoffen werden bevorzugt im Pultruisionsverfahren hergestellt. Pultrusion ist ein kontinuierliches Herstellverfahren für faserverstärkte duromere Kunststoffe. Bei den Produkten handelt es sich klassisch um endlos-Profile mit gleichmäßigem Querschnitt. Dabei werden Verstärkungsmaterialien wie typischerweise Rovings aber auch Schnittmatten, Endlosmatten, Gelege und Vliese allein oder in Kombination, durch ein Harzbad geführt, überschüssiges Harz abgestreift, der Aufbau dabei durch entsprechende Blenden vorgeformt und die imprägnierten Fasern dann durch ein beheiztes Werkzeug mit entsprechendem Pofil-Querschnitt oder alternativ frei schwebend durch eine Aushärtevorrichtung gezogen und gehärtet. Zusammengefasst besteht eine Pultrusionsanlage aus den folgenden Komponenten:
- Einer Abwickelstation für die Verstärkungsfasern
- Der Imprägniervorrichtung
- Der Preforming- und Zuführungs-Einrichtung
- Dem Werkzeug (**A**) oder der Aushärtevorrichtung (**B**)
- Der Abzieh-Station
- Der Konfektionierung

Die Abwickelstation besteht aus einem Spulengatter für Rovinge und/oder entsprechenden Abwickelstationen für flächenförmige Verstärkungsstoffe. Die Imprägniervorrichtung kann ein offenes Harzbad oder eine geschlossene Mehrkomponenten-Imprägniereinrichtung sein. Die Imprägniervorrichtung kann beheizbar und/oder mit einer Umwälzeinheit ausgeführt sein. Nach der Imprägnierung der Fasern mit dem Harzsystem werden die getränkten Verstärkungsmaterialien durch Lochblenden geführt, wobei überschüssiges Harz abgestreift und damit der angestrebte Faservolumengehalt eingestellt wird. Durch die Form der Blenden wird außerdem kontinuierlich die endkonturnahe Preform erzeugt. Die so definierte, imprägnierte Faser-Preform läuft dann in das beheizte Werkzeug ein. Durch das Ziehen durch das Werkzeug (A) erhält das pultrudierte Profil seine endgültige Abmessung und Kontur. Während dieses Formgebungsprozesses härtet das Bauteil aus. Die Beheizung erfolgt elektrisch oder über Thermal-Öl. Bevorzugt ist das Werkzeug mit mehreren, unabhängig voneinander steuerbaren Heizsegmenten ausgestattet. Werkzeuge für die Pultrusion sind meist zwischen 75 cm und 1,50 m lang und können einteilig oder zweiteilig sein. Die Zieh-Station zieht kontinuierlich die Verstärkungsmaterialien von der jeweiligen AbwickelStation, die Verstärkungsfasern durch die Imprägniereinrichtung, die imprägnierten Fasermaterialien durch die Lochblende und die kontinuierlich erzeugte Preform durch das formgebende Werkzeug, wo das Harzsystem dann aushärtet und aus welchem das fertige Profil am Ende austritt. Das letzte Element in der Prozesskette ist eine Bearbeitungsstation zur Oberflächengestaltung (z. B. Fräse), gefolgt von einer Sägestation, wo die pultrudierten Profile anschließend auf das gewünschte Maß abgelängt werden.

Alternativ und bevorzugt kann die Oberflächengestaltung der Bewehrungsstäbe nach dem Imprägnierschritt und dem Abstreifen überschüssigen Harzes vor dem Eintritt des Faser-/Matrixaufbaus in eine Aushärtevorrichtung (B) erfolgen. In diesem Fall wird der imprägnierte, zusammengeführte Faserstrang nach der Harzabstreifung mit kreuz- oder spiralförmig umwickelten Umwindefäden versehen. Die Aushärtevorrichtung ist in diesem Fall ein Ofen, in welchem der kontinuierlich erzeugte mit Harz imprägnierte Faseraufbau frei schwebend gehärtet wird. Die Beheizung der Aushärtevorrichtung bzw. der Wärmeeintrag in das Material kann durch Heißluft, IR-Strahlung oder Mikrowellenerwärmung geschehen. Eine solche Aushärtevorrichtung hat typischerweise eine Länge von 2 bis 10 m, mit unabhängig voneinander steuerbaren Heizsegmenten. Die Härtung erfolgt bei Temperaturen zwischen 100 und 300°C, typische Vorschubgeschwindigkeiten sind 0,5 bis 5m / min.

Am Ende des gesamten Formgebungsprozesses (Aushärtung der Stäbe mit erfolgter Oberflächengestaltung) kann optional noch eine Oberflächenbeschichtung erfolgen.

Gegenstand der Erfindung ist auch die Verwendung
einer Zusammensetzung aus
B1) mindestens einer Epoxyverbindung
   und
B2) mindestens einem Diamin und/oder Polyamin
   in einem stöchiometrischen Verhältnis der Epoxyverbindung B1) zu der Diamin und/oder Polyamin Komponente B2) von 0,8:1 bis 2:1,
   als Matrixmaterial,
   sowie
C) optional weiteren Hilfs- und Zusatzstoffen,
auf mindestens einem Faser förmigen Träger A),
zur Herstellung von Bewehrungsstäben.

Die erfindungsgemäßen Stäbe werden bevorzugt eingesetzt im Betonbau, z.B. im Beton-Hoch- und Tiefbau. Aufgrund ihrer elektromagnetischen Transparenz, ihrer Korrosionsfestigkeit, ihres geringen E-Moduls (wichtig im Falle dynamischer Belastungen, wie z.B. bei Erdbeben) und ihres geringeren Gewichts sind die gegenwärtigen oder zukünftigen Einsatzgebiete für Composite Bewehrungen bevorzugt Fundamente, insbesondere für Transformatoren, Armierung von Gebäuden, Tunnelbauprojekte, Küsten- und Hafenbefestigungen, Straßen- und Brückenbau sowie Fassadengestaltungen. In Verbindung mit Verstärkungen aus Hochmodulfasern, wie z. B. Kohlenstoffasern, können faserverstärkte Kunststoff-Bewehrungsstäbe als Armierung in Spannbeton eingesetzt werden.

Gegenstand der Erfindung sind auch Composites, enthaltend Bewehrungsstäbe, im Wesentlichen aufgebaut aus
A) mindestens einem Faser förmigen Träger und
B) und einer gehärteten Zusammensetzung aus
B1) mindestens einer Epoxyverbindung und
B2) mindestens einem Diamin und/oder Polyamin
   in einem stöchiometrischen Verhältnis der Epoxyverbindung B1) zu der Diamin und/oder Polyamin Komponente B2) von 0,8:1 bis 2:1,

   als Matrixmaterial,
   sowie
C) optional weiteren Hilfs- und Zusatzstoffen.

Der Begriff Composites wird im Rahmen dieser Erfindung synonym zu den Begriffen Verbundstoff, Verbund-Bauteile, Verbundwerkstoff, Verbund-Formteile, faserverstärkte Kunststoffe verwendet.

### Beispiele

Um den Einfluss alkalischer Medien auf die Beständigkeit des Matrixsystems zu bestimmen, wurden Auslagerungsversuche in alkalischer Umgebung durchgeführt.

Für die Lagerung in 10%iger Natronlauge bei 80°C wurden Reinharzplatten (4 mm) gegossen, Härtungsbedingungen siehe Tabelle 1. Aus den erhaltenen Reinharzplatten wurden Prüfkörper mit den Abmessungen 50 x 50 x 4 mm hergestellt und diese für 4 Wochen in 10%iger Natronlauge bei 80°C gelagert. Während dieser Zeit wurde die Gewichtsänderung durch Wägen bestimmt und die prozentuale Gewichtsänderung festgehalten, wie in Tabelle1 gezeigt.

Es ist zu erkennen, dass die Probe auf Basis des anhydridbasierten Härtersystems (Versuch 2, Methyltetrahydrophthalic Anhydride (MTHPA)) nach anfänglicher Gewichtszunahme wieder Gewicht verliert. Die Proben wurden deshalb nach Beendigung der Lagerung zurück getrocknet (1 Monat bei RT). Unter diesen Bedingungen zeigte sich bei der anhydridgehärteten Epoxidharzformulierung (Versuch 2) ein Masseverlust von rund einem Prozent, während bei der IPD-gehärteten Epoxidharzformulierung immer noch eine Gewichtszunahme infolge eingelagerten Mediums feststellbar ist. Alle Ergebnisse sind in Tabelle 1 gegenübergestellt. Dies zeigt einen substanziellen Angriff der anhydridgehärteten Matrix durch das alkalische Medium, was sich auch in der nach Chemikalienlagerung verminderten Glasübergangstemperatur widerspiegelt.

Beispiele und Ergebnisse sind in Tabelle 1 gezeigt:

**Tabelle 1**

| | **Versuch 1 gemäß Erfindung** | **Versuch 2, Vergleich** |
|---|---|---|
| | Einsatzmenge in Gramm | Einsatzmenge in Gramm |
| Epikote 828 HEXION | 441 | 100 |
| 1-Methylimidazol | --- | 0,5 |
| VESTAMIN IPD Evonik Industries AG (Isophorondiamin) | 100 | --- |
| MTHPA | --- | 90 |
| **Härtung** | 30 min. | 4 h80°C + 4 h |
| | 120°C | 120°C |

| **Messergebnisse** | | |
|---|---|---|
| Tg nach Härtung^{a)} und Lagerung bei Umgebungsbedingungen (2 Monate, "0-Probe") | 144°C | 132°C |
| Tg max.^{b)} der 0-Probe | 156°C | 133°C |

| **1-monatige Lagerung in Natronlauge 10%ig bei 80°C:** | | |
|---|---|---|
| Masseänderung nach | | |
| 1 d | + 0,56 % | + 0,28 % |
| 3 d | +0,96% | +0,44% |
| 7d | +1,26% | + 0,38 %* |
| 14d | +1,46% | +0,18% |
| 28 d | +1,60% | +0,23% |

| **Rücktrocknung bei Umgebungsbedingungen für 1 Monat:** | | |
|---|---|---|
| Masseänderung gegenüber Original | + 1,23 % | - 0,90 %** |
| Tg nach Lagerung in 10%iger Natronlauge und Rücktrocknung^{a)} | 146°C | 123°C*** |
| Tg max.^{b)} | 159°C | 129°C |

| | | |
|---|---|---|
| * die Trendumkehr bei der Masseänderung zeigt an, dass die Anyhydrid basierende Matrix (Versuch 2) abgebaut wird ** die negative Masseänderung belegt, dass sich die Anyhydrid basierende Matrix auflöst ***ein Tg-Verlust von 9°C belegt den Abbau des Matrix-Systems in Versuch 2 zusätzlich ^{a)} DSC-Experiment an unter den angegebenen Bedingungen gehärteten und gelagerten Prüfkörpern (Reinharze). Den Reinharzprüfkörpern wurde eine Probe entnommen und in der DSC die Glasübergangstemperatur bestimmt (Aufheizrate 10K/min bis zu einer maximalen Temperatur von 250°C) ^{b)} Die Bezeichnung "Tg max" bezieht sich auf das Ergebnis (= maximaler erreichbarer Tg des Materials) eines 2ten DSC-Experiments an *derselben* Probe unter identischen Bedingungen wie bei a). Alle Tg gemessen mittels DSC gemäß der DIN EN ISO 11357-1. | | |

### DSC-Messungen

Die DSC-Messungen wurden gemäß der DIN EN ISO 11357-1 vom März 2010 durchgeführt.

Es wurde ein Wärmestrom-Differenz-Kalorimeter des Hersteller Mettler-Toledo Modell: DSC 821 mit der Seriennr.: 5116131417 verwendet. Die Proben werden zweimal von -30 °C bis 250 °C mit 10 K/min gefahren. Die Abkühlrampe zwischen den beiden Messungen beträgt 20K/min.

Ausführliche Beschreibung der Meßmethode:
1. Typ (Wärmestrom-Differenz-Kalorimeter oder leistungskompensiertes Kalorimeter), Modell und Hersteller des verwendeten DSC-Geräts;
2. Werkstoff, Art und Typ sowie, wenn erforderlich, Masse der verwendeten Tiegel;
3. Art, Reinheitsgrad und Mengenstrom des verwendeten Spülgases;
4. Art des Kalibrierverfahrens und Einzelheiten zu den verwendeten Kalibriersubstanzen, einschließlich Quelle, Masse und weiterer für die Kalibrierung bedeutender Eigenschaften;
5. Einzelheiten zur Probenahme, Probekörpervorbereitung und Konditionierung

1: Wärmestrom-Differenz-Kalorimeter
   Hersteller: Mettler-Toledo
   Modell: DSC 821
   Seriennr.: 5116131417
2: Tiegelmaterial: Reinstaluminium
   Grösse: 40µl , ohne pin,
   Mettler Best.-Nr.: ME-26763
   Masse incl. Deckel: ca. 48 mg
3: Spülgas: Stickstoff
   Reinheitsgrad: 5.0 (> 99,999 Vol.%)
   Mengenstrom: 40 ml/min
4: Kalibrierverfahren: einfach
   Material 1: Indium
   Mettler-Calibrier-Set ME-51119991
   Masse: ca. 6 mg pro Einwaage
   Kalibrierung von Temperatur (Onset) und Wärmestrom
   Material 2: VE-Wasser
   Entnahme aus dem Haussystem
   Masse: ca. 1 mg pro Einwaage
   Kalibrierung der Temperatur (Onset)
5: Probennahme: aus angeliefertem Probekörper
   Probeneinwaage: 8 bis 10 mg
   Probenvorbereitung: keine
   Tiegeldeckel: gelocht
   Meßprogramm: -30 bis 250 °C 10K/min 2x

## Patentansprüche

1. Bewehrungsstäbe, im Wesentlichen aufgebaut aus
A) mindestens einem Faser förmigen Träger
und
B) und einer gehärteten Zusammensetzung aus
B1) mindestens einer Epoxyverbindung
und
B2) mindestens einem Diamin und/oder Polyamin
in einem stöchiometrischen Verhältnis der Epoxyverbindung B1) zu der Diamin und/oder Polyamin Komponente B2) von 0,8:1 bis 2:1,
als Matrixmaterial,
sowie
C) optional weiteren Hilfs- und Zusatzstoffen.

2. Bewehrungsstäbe nach Anspruch 1, **dadurch gekennzeichnet, dass** faserförmiges Material ausgewählt aus Glas, Kohlenstoff, Kunststoffen, Naturfasern, mineralischen Fasermaterialien oder keramische Fasern, enthalten ist.

3. Bewehrungsstäbe nach mindestens einem der vorherigen Ansprüche, **dadurch gekennzeichnet, dass** Epoxyverbindungen B1) auswählt aus gesättigten, ungesättigten, aliphatischen, cycloaliphatischen, aromatischen, oder heterocyclisch Epoxyverbindungen, enthalten sind, und diese auch Hydroxylgruppen aufweisen können.

4. Bewehrungsstäbe nach mindestens einem der vorherigen Ansprüche, **dadurch gekennzeichnet, dass** Epoxyverbindungen B1) ausgewählt aus Glycidylether, Glycidylester, aliphatischen Epoxiden, Diglycidylethern auf Basis Bisphenol A und/oder Bisphenol F, Glycidylmethacrylaten, enthalten sind.

5. Bewehrungsstäbe nach mindestens einem der vorherigen Ansprüche, **dadurch gekennzeichnet, dass** Epoxyverbindungen B1), ausgewählt aus der Gruppe umfassend Epoxidharze auf Basis von Bisphenol A-diglycidylether, Epoxidharze auf Basis von Bisphenol F-diglycidylether, oder cycloaliphatische Typen, enthalten sind.

6. Bewehrungsstäbe nach mindestens einem der vorherigen Ansprüche, **dadurch gekennzeichnet, dass** Amine B2) ausgewählt primären und/oder sekundäre Di- und/oder Polyaminen, enthalten sind.

7. Bewehrungsstäbe nach mindestens einem der vorherigen Ansprüche, **dadurch gekennzeichnet, dass** als Amine B2) die folgenden Amine allein oder in Mischungen eingesetzt werden:
• aliphatische Amine, wie die Polyalkylenpolyamine, bevorzugt ausgewählt aus 1,2-Ethylendiamin, 1,2-Propylendiamin, 1,3-Propylendiamin, 1,2-Butylendiamin, 1,3-Butylendiamin, 1,4-Butylendiamin, 2-(Ethylamino)ethylamin, 3-(Methylamino)propylamin Diethylentriamin,Triethylentetramin, Pentaethylenhexamin, Trimethylhexamethylendiamin, 2,2,4- Trimethylhexamethylendiamin, 2,4,4-Trimethylhexamethylendiamin, 2-Methylpentandiamin, Hexamethylendiamin, N-(2-Aminoethyl)-1,2-ethandiamin, N-(3-Aminopropyl)-1,3-propandiamin, N,N"-1,2-Ethandiylbis-(1,3-propandiamin), Dipropylentriamin Adipinsäuredihydrazid, Hydrazin;
• Oxyalkylenpolyamine, ausgewählt aus Polyoxypropylendiamin und Polyoxypropylentriamin;
• cycloaliphatische Amine, ausgewählt aus Isophorondiamin (3,5,5-Trimethyl-3-aminomethyl-cyclohexylamin), 4,4'-Diaminodicyclohexylmethan, 2,4'-Diaminodicyclohexylmethan und 2,2'-Diaminodicyclohexylmethan allein oder in Mischungen der Isomeren, 3,3'-Dimethyl-4,4'-diamino-dicyclohexylmethan, N-Cyclohexyl-1,3-propandiamin, 1,2-Diaminocyclohexan, 3-(Cyclohexylamino)propylamin, Piperazin, N-Aminoethylpiperazin, TCD-Diamin (3(4), 8(9)-Bis(aminomethyl)-tricyclo[5.2.1.0^{2.6}]decan),
• araliphatische Amine;
• aromatische Amine, ausgewählt aus Phenylendiamine, 1,3-Phenylendiamin,. 1,4-Phenylendiamin,4,4'-Diaminodiphenylmethan, 2,4'-Diaminodiphenylmethan 2,2'-Diaminodiphenylmethan allein oder in Mischungen der Isomeren;
• Addukthärter, welches die Umsetzungsprodukte von Epoxidverbindungen, insbesondere Glycidylether des Bisphenol A und F, mit überschüssigem Amin sind;
• Polyamidoaminhärter, die durch Kondensation von Mono- und Polycarbonsäuren mit Polyaminen erhalten werden, insbesondere durch Kondensation von Dimerfettsäuren mit Polyalkylenpolyaminen;
• Mannichbasenhärter, die durch Umsetzung von ein- oder mehrwertigen Phenolen mit Aldehyden, insbesondere Formaldehyd, und Polyaminen erhalten werden;
• Mannichbasen, Formaldehyd, m-Xylylendiamin,N-Aminoethylpiperazin, Abmischungen von N-Aminoethylpiperazin mit Nonylphenol und/oder Benzylalkohol, Phenalkamine, die in einer Mannichreaktion aus Cardanolen, Aldehyden und Aminen gewonnen werden.

8. Bewehrungsstäbe nach mindestens einem der vorherigen Ansprüche, **dadurch gekennzeichnet, dass** Amine B2) ausgewählt aus Isophorondiamin, 4,4'-Diaminodicyclohexylmethan, 2,4'-Diaminodicyclohexylmethan 2,2'-Diaminodicyclohexylmethan, allein oder in Mischungen der Isomeren, eine Mischung der Isomeren aus 2,2,4-Trimethylhexamethylendiamin und 2,4,4-Trimethylhexamethylendiamin, Addukthärter auf Basis der Umsetzungsprodukte von Epoxidverbindungen und Aminen B2) oder Kombination der vorgenannten Aminen B2), enthalten sind.

9. Bewehrungsstäbe nach mindestens einem der vorherigen Ansprüche, **dadurch gekennzeichnet, dass** Amine B2) ausgewählt aus Isophorondiamin, und/oder einer Kombination aus Isophorondiamin und einer Mischung der Isomeren aus 2,2,4-Trimethylhexamethylendiamin und 2,4,4-Trimethylhexamethylendiamin, enthalten sind.

10. Bewehrungsstäbe nach mindestens einem der vorherigen Ansprüche, **dadurch gekennzeichnet, dass** Mischungen der Di- und/oder Polyamine mit latenten Härtern als Komponente B2) eingesetzt werden.

11. Bewehrungsstäbe nach mindestens einem der vorherigen Ansprüche, **dadurch gekennzeichnet, dass** latente Härter, ausgewählt aus Dicyandiamid, Cyanoguanidine, aromatische Amine, Guanidinen, modifizierten Polyaminen, N-Acylimidazolen, Imidazolen, Carbonsäurehydrazide, Triazinderivate, Melamin und dessen Derivate, N-Cyanacylamid-Verbindungen, Acylthiopropylphenole,
eingesetzt werden.

12. Verfahren zur Herstellung von Bewehrungsstäben, im Wesentlichen aufgebaut aus
A) mindestens einem Faser förmigen Träger
und
B) und einer gehärteten Zusammensetzung aus
B1) mindestens einer Epoxyverbindung
und
B2) mindestens einem Diamin und/oder Polyamin
in einem stöchiometrischen Verhältnis der Epoxyverbindung B1) zu der Diamin und/oder Polyamin Komponente B2) von 0,8:1 bis 2:1,
als Matrixmaterial,
sowie
C) optional weiteren Hilfs- und Zusatzstoffen,
durch Aufbringen einer Mischung von B1) und B2) und optional C) auf den Faser förmigen Träger,
und anschließende Härtung der Zusammensetzung.

13. Verfahren zur Herstellung von Bewehrungsstäben nach Anspruch 12, wobei die Bewehrungsstäbe im Pultruisionsverfahren hergestellt werden.

14. Verwendung einer Zusammensetzung aus
B1) mindestens einer Epoxyverbindung
und
B2) mindestens einem Diamin und/oder Polyamin
in einem stöchiometrischen Verhältnis der Epoxyverbindung B1) zu der Diamin und/oder Polyamin Komponente B2) von 0,8:1 bis 2:1,
als Matrixmaterial,
auf mindestens einem Faser förmigen Träger A),
zur Herstellung von Bewehrungsstäben.

15. Verwendung nach Anspruch 14, wobei Verbindungen A)-C) nach mindestens einem der Ansprüche 2 bis 11 enthalten sind.

16. Composites, enthaltend Bewehrungsstäbe, im Wesentlichen aufgebaut aus
A) mindestens einem Faser förmigen Träger
und
B) und einer gehärteten Zusammensetzung aus
B1) mindestens einer Epoxyverbindung
und
B2) mindestens einem Diamin und/oder Polyamin
in einem stöchiometrischen Verhältnis der Epoxyverbindung B1) zu der Diamin und/oder Polyamin Komponente B2) von 0,8:1 bis 2:1,
als Matrixmaterial,
sowie
C) optional weiteren Hilfs- und Zusatzstoffen.

17. Composites nach Anspruch 16, wobei Verbindungen A)-C) nach mindestens einem der Ansprüche 2 bis 11 enthalten sind.
